# EUROPÄISCHE PATENTSCHRIFT

(11) **EP 1 709 342 B1**
(45) Veröffentlichungstag und Bekanntmachung des Hinweises auf die Patenterteilung: **08.08.2007**
(21) Anmeldenummer: 05700911.0
(22) Anmeldetag: 14.01.2005
(51) Int. Cl.: F16D 55/227

(54) **SCHEIBENBREMSE, INSBESONDERE FÜR EIN NUTZFAHRZEUG**
DISK BRAKE, ESPECIALLY FOR A UTILITY VEHICLE
FREIN A DISQUE DESTINE NOTAMMENT A UN VEHICULE UTILITAIRE

(30) Priorität: 21.01.2004 DE 102004003083
(43) Veröffentlichungstag der Anmeldung: 11.10.2006
(73) Patentinhaber: KNORR-BREMSE SYSTEME FÜR NUTZFAHRZEUGE GMBH, 80809 München (DE)
(72) Erfinder: MACKE, Wlodzimierz, 82140 Olching (DE); BEIL, Florian, 82140 Olching (DE)
(74) Vertreter: Mattusch, Gundula
(86) Internationale Anmeldenummer: PCT/EP2005/000309
(87) Internationale Veröffentlichungsnummer: WO 2005/071280

(56) Entgegenhaltungen:
- EP-A- 0 831 242
- US-A- 5 161 651
- US-A- 6 039 156

## Beschreibung

Die vorliegende Erfindung betrifft eine Scheibenbremse, insbesondere für ein Nutzfahrzeug, gemäß dem Oberbegriff des Anspruchs 1. So eine Bremse geht z.B. aus EP-A-0 831 242 hervor.

Bei derartigen Scheibenbremsen wird der Bremssattel durch Befestigungselemente mit Führungsholmen mit dem Bremsträger, der an das Fahrzeug angeschlossen ist, verbunden. Dabei greifen die Führungsholme einerseits in den Bremsträger ein, während sie andererseits in Gleitlagern des Bremssattels so geführt sind, daß eine axiale Verschiebung des Bremssattels am ortsfesten Bremsträger möglich ist.

Zum Schutz der Führungsholme, insbesondere um eine Verschmutzung zu verhindern, ist in dem jeweiligen Bereich zwischen dem Bremsträger und dem Bremssattel der zugeordnete Führungsholm mit einem Faltenbalg ummantelt. Vor allem aufgrund von Platzmangel wird der Faltenbalg kleinstmöglich dimensioniert, so daß er nah am Führungsholm anliegt, wobei die umlaufenden Kopfbereiche der dem Führungsholm zugewandten Falten praktisch als Dichtlippen fungieren, durch die jeweils insoweit hermetisch abgedichtete Kammern entstehen.

Bei einer langsamen Bewegung des Bremssattels, wie sie bei einem verschleißbedingten Nachstellen des Bremsträgers erfolgt, wird die im Faltenbalg eingeschlossene Luftmenge entsprechend der Veränderung des Volumens durch Diffusion ausgeglichen, d. h., Luftmoleküle durchwandern die Wand des Faltenbalges in die eine oder andere Richtung, so daß kein Über- bzw. Unterdruck in den gebildeten Kammern entsteht. Dabei ist die Anzahl der Falten und deren Höhe abhängig vom auszuführenden Arbeitshub.

Beim Verschieben des Bremssattels vom Bremsträger fort saugt sich durch den entstehenden Unterdruck der Faltenbalg am Holm fest, wobei durch die anliegenden, ungewollt Dichtlippen bildenden umlaufenden Kopfbereiche der dem Führungsholm zugewandten Falten voneinander unabhängige Unterdruckkammern bilden.

Bei einem Verschieben des Bremssattels in entgegengesetzte Richtung, also zum Bremsträger hin, wird durch die Verschiebung der Unterdruck in der dem Bremssattel zugewandten ersten gebildeten Kammer verringert, wobei sich diese Falte entspannt und der Faltenbalg sich in diesem Bereich wieder zusammenfalten kann. Die folgenden Kammern hingegen bleiben durch den Unterdruck angesaugt und werden nicht mehr gefaltet. Hierdurch wird der Faltenbalg bei der weiteren axialen Verschiebung des Bremssattels sozusagen umgestülpt und in die Führungsbohrung des Bremssattels eingezogen, so daß der Faltenbalg unter Umständen beschädigt wird, was zum Ausfall der Bremse führen kann.

Der vorliegenden Erfindung liegt daher die Aufgabe zugrunde, eine Scheibenbremse der gattungsgemäßen Art so weiter zu entwickeln, daß mit konstruktiv einfachen Mitteln eine funktionsbedingte Beschädigung der Faltenbälge ausgeschlossen und die Betriebssicherheit der Scheibenbremse insgesamt verbessert wird.

Diese Aufgabe wird durch eine Scheibenbremse gelöst, die die Merkmale des Anspruchs 1 aufweist.

Durch diese Modifizierung des Faltenbalges, die im übrigen mit kleinem zusätzlichen Fertigungsaufwand möglich ist, wird wirksam verhindert, daß sich in den getrennt gebildeten Kammern ein Unterdruck entwickeln kann, durch den dann die Wand des Faltenbalges am Führungsholm weitgehend vollflächig anliegen würde.

Vielmehr findet ein Druckausgleich zwischen den einzelnen Kammern statt, so daß der Faltenbalg seiner gedachten Funktion uneingeschränkt und dauerhaft entsprechen kann.

Ein Verschieben des Bremssattels in Richtung des Bremsträgers führt nicht nur zu einer Reduzierung des Unterdrucks in der dem Bremssattel benachbarten ersten Kammer, sondern im gesamten, vom Faltenbalg eingeschlossenen Raum.

Dadurch ist gesichert, daß sich der Faltenbalg funktionsgemäß gleichmäßig faltet, so daß dessen Beschädigung, wie zum Stand der Technik beschrieben, ausgeschlossen ist.

Durch die vom Umfang des Führungsholms, der vorzugsweise kreisrund ist, abweichende Umfangskontur der dem Führungsholm zugewandten Kopfbereiche der Falten wird partiell eine Spaltbildung erreicht, durch die in Bezug auf einen Druckausgleich bzw. einen Luftaustausch praktisch ein Ein-Kammer-System gebildet wird. Das Entstehen durchgehend am Führungsholm anliegender Dichtlippen wird dadurch verhindert.

Nach einer vorteilhaften Weiterbildung der Erfindung ist vorgesehen, daß der entsprechende umlaufende Kopfbereich jeder Falte mit mindestens einer Noppe versehen ist, die an dem Führungsholm anliegt und die Falte im übrigen unter Spaltbildung vom Führungsholm beabstandet. Dabei wird durch den gebildeten Spalt ein Druckausgleich erzielt.

Dieser Druckausgleich kann auch erreicht werden, wenn statt der Noppe, die eine positive Ausformung darstellt, eine vergleichbare, jedoch eine negative Ausformung bildende Aussparung im Kopfbereich der jeweiligen Falte vorgesehen ist, durch die ein Strömungsdurchgang geschaffen ist zwischen zwei benachbarten Kammern.

Im Bedarfsfall können auch mehrere Noppen bzw. Aussparungen über den Umfang mehr oder weniger gleichmäßig vorgesehen sein.

Auch eine andere, von der Umfangskontur des Führungsholms abweichende umfängliche Kontur der Kopfbereiche der Falten ist denkbar, beispielsweise in Form eines Polygons, bei dem dann die Seiten des Polygons am Führungsholm anliegen, während die gebildeten Eckbereiche den gewünschten Durchgang schaffen.

Die gleiche Wirkung wird erzielt mit einer ovalen Konturierung, die gegenüber der kreisrunden Kontur des Führungsholms ebenfalls zu einer Spaltbildung führt und zwar an zwei sich gegenüber liegenden Endbereichen, wobei es ausreicht, das größte Abmaß der Kontur des Kopfbereiches geringfügig größer zu halten als das kleinste, das dem Kopfbereich zugeordnet ist, mit dem die entsprechende Falte am Führungsholm anliegt.

Beachtenswert ist in jedem Fall, daß die dem Führungsholm zugeordneten Kopfbereiche des Faltenbalges bei Verformung nicht vollständig an der Außenfläche des Führungsholms anliegen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer schematischen Draufsicht,
- Figur 2: einen Teilausschnitt der Scheibenbremse gemäß der Kennzeichnung A in Figur 1,
- Figuren 3 und 4: jeweils einen Querschnitt durch einen Faltenbalg der Scheibenbremse entsprechend der Schnittlinie B-B in Figur 2.

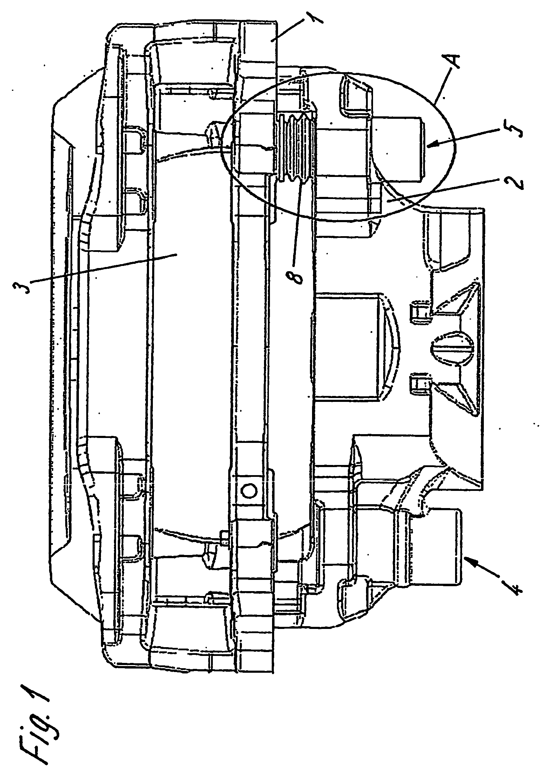

In der Figur 1 ist eine Scheibenbremse, insbesondere für ein Nutzfahrzeug, dargestellt, die in ihrem Grundaufbau einen Bremssattel 2 aufweist, der eine Bremsscheibe 3 umfaßt, die an einer nicht dargestellten Achse des Nutzfahrzeuges befestigt ist.

Der Bremssattel 2 ist an einem Bremsträgere 1 des Nutzfahrzeuges, bezogen auf die Bremsscheibe 3, axial verschiebbar gelagert. Hierzu sind zwei Befestigungselemente 4, 5 vorgesehen, von denen vorzugsweise eines als Fest- und das andere als Loslager ausgebildet ist.

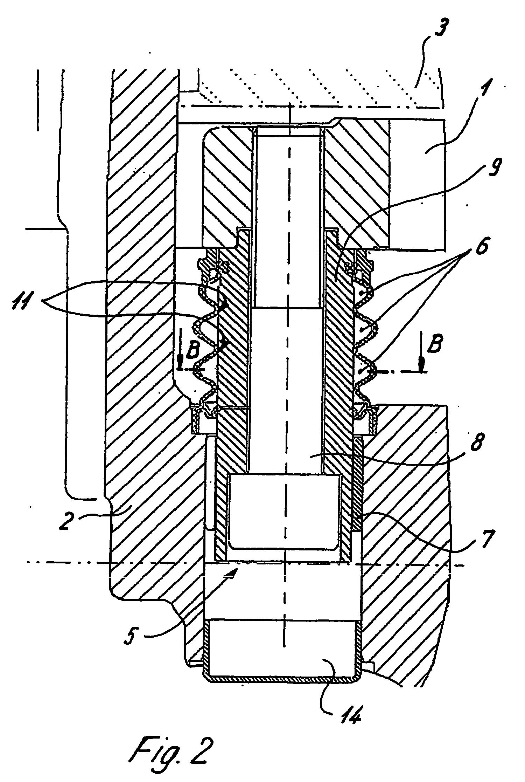

Jedes Befestigungselement 4, 5 weist einen Führungsholm 9 (Figur 2) auf, der mittels einer Schraube 8 am Bremsträger 1 befestigt ist und der in einem in dem Bremssattel 2 angeordneten Gleitlager 7 gelagert ist.

Auf ihrer dem Bremsträger 1 abgewandten Seite ist ein Deckel 14 in eine das Gleitlager 7 aufnehmende Bohrung des Bremssattels 2 eingesetzt, durch den das Befestigungselement praktisch hermetisch gegenüber dem Außenbereich abgedichtet ist, während eine hermetische Abdichtung im Innenbereich der Scheibenbremse durch einen Faltenbalg 10 gebildet wird, der am Führungsholm 9 den zwischen dem Bremsträger 1 und dem Bremssattel 2 gebildeten Bereich umhüllt.

Dabei ist der Faltenbalg 10 auf seiner dem Bremsträger 1 zugewandten Seite mit dem Führungsholm 9 fest verbunden, während er gegenüber liegend am Bremssattel 2 angeschlossen ist, so daß bei axialer Verschiebung des Bremssattels 2 auf dem Führungsholm 9 der Faltenbalg 10, der im übrigen aus einem elastischen Material besteht, auseinandergezogen oder zusammengedrückt wird.

Die dem Führungsholm 9 zugewandten umlaufenden Kopfbereiche 11 der Falten, die jeweils die Begrenzung für eine Kammer 6 bilden, liegen bereichsweise am Führungsholm 9 an.

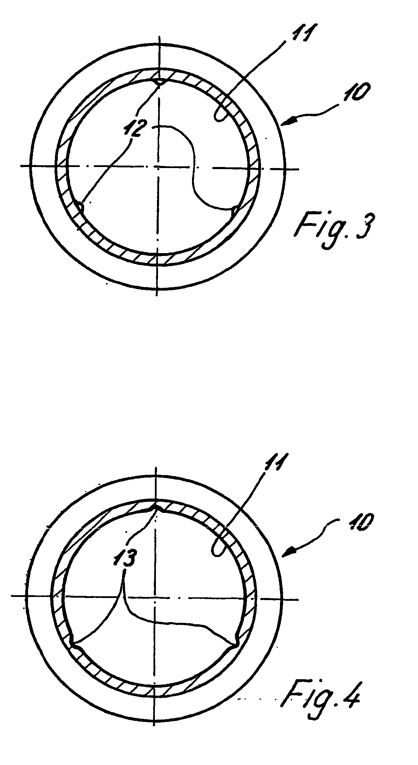

Erfindungsgemäß sind die umlaufenden Kopfbereiche 11 jedoch in ihrer Umfangskontur abweichend vom Umfang des Führungsholmes 9. Entsprechende Ausführungsbeispiele sind in den Figuren 3 und 4 gezeigt.

Bei dem in der Figur 3 dargestellten Beispiel sind über den Umfang des Kopfbereiches 11 verteilt nach innen gerichtete Noppen 12 vorgesehen, mit denen die Falten und somit der gesamte Faltenbalg 10 am Führungsholm 9 anliegen. Ein zwischen zwei Noppen 12 gebildeter Spaltbereich ergibt eine Verbindung der einen Kammer 6 zur benachbarten, so daß ein Druckausgleich zwischen allen Kammern 6 gegeben ist.

Das Ausführungsbeispiel gemäß Figur 4 zeigt Aussparungen 13 im Kopfbereich 11, die vom Führungsholm 9 fort nach außen gerichtet sind und den genannten Durchgang für einen Druckausgleich bilden, während der Kopfbereich 11 der entsprechenden Falte im übrigen an dem Führungsholm 9 anliegt.

### Bezugszeichenliste

- 1: Bremsträger
- 2: Bremssattel
- 3: Bremsscheibe
- 4: Befestigungselement
- 5.: Befestigungselement
- 6: Kammer
- 7: Gleitbuchse
- 8: Schraube
- 9: Führungsholm
- 10: Faltenbalg
- 11: Kopfbereich
- 12: Noppe
- 13: Aussparung
- 14: Deckel

## Patentansprüche

1. Scheibenbremse, insbesondere für ein Nutzfahrzeug, mit einem Bremssattel (2), der eine mit Bremsbelägen in Wirkverbindung bringbare Bremsscheibe (3) aufweist und an einem Bremsträger (1), bezogen auf die Bremsscheibe (3), axial verschiebbar befestigt ist, wozu Führungsholme (9) mit dem Bremsträger (1) fest verbunden sind, auf denen der Bremssattel (2) geführt ist, wobei jeder Führungsholm (9) in dem zwischen dem Bremssattel (2) und dem Bremsträger (1) gebildeten Bereich von einem beidseitig festgelegten Faltenbalg (10) umhüllt ist, **dadurch gekennzeichnet, daß** die umlaufenden Kopfbereiche (11) der dem Führungsholm (9) zugewandten Falten des Faltenbalges (10) eine vom Umfang des Führungsholms (9) abweichende Umfangskontur aufweisen.

2. Scheibenbremse nach Anspruch 1, **dadurch gekennzeichnet, daß** die Kopfbereiche (11) teilweise an dem Führungsholm (9) anliegen.

3. Scheibenbremse nach Anspruch 1 oder 2, **dadurch gekennzeichnet, daß** die Kopfbereiche (11) eine ovale Kontur beschreiben.

4. Scheibenbremse nach einem der vorhergehenden Ansprüche, **dadurch gekennzeichnet, daß** die übrigen in ihrer Kontur kreisrund ausgebildeten Kopfbereiche (11) jeweils mit mindestens einer Noppe (12) versehen sind, die an der Außenfläche des Führungsholms (9) anliegen.

5. Scheibenbremse nach einem der vorhergehenden Ansprüche, **dadurch gekennzeichnet, daß** die im übrigen in ihrer Kontur kreisrunden Kopfbereiche mit mindestens einer Aussparung (13) versehen sind, durch die ein Durchgang zwischen zwei benachbarten Kammern (6) des Faltenbalges (10) gebildet wird.

6. Scheibenbremse nach einem der vorhergehenden Ansprüche, **dadurch gekennzeichnet, daß** die jeweilige Kontur der Kopfbereiche (11) als Polygon ausgebildet ist.

7. Scheibenbremse nach einem der vorhergehenden Ansprüche, **dadurch gekennzeichnet, daß** die durch die Falten gebildeten Kammern (6) des Faltenbalges (10) im wesentlichen gleich groß sind.

## Claims

1. Disc brake, in particular for a utility vehicle, with a brake caliper (2) which comprises a brake disc (3) that can be brought into active engagement with brake linings and which is mounted so that it can move axially relative to the brake disc (3) on a brake support (1), for which purpose guide members (9) are firmly connected to the brake support (1), on which the brake caliper (2) is guided, each such guide member (9) being enclosed in the area between the brake caliper (2) and the brake support (1) by a bellows (10) attached at either end, **characterised in that** the surrounding head areas (11) of the folds of the bellows (10) directed towards the guide member (9) have a peripheral contour that deviates from the circumference of the guide member (9).

2. Disc brake according to Claim 1, **characterised in that** the said head areas (11) are partially in contact with the guide member (9).

3. Disc brake according to Claims 1 or 2, **characterised in that** the head areas (11) describe an oval contour.

4. Disc brake according to any of the preceding claims, **characterised in that** head areas (11) formed with an otherwise circular contour are in each case provided with at least one bump (12), these being in contact with the outer surface of the guide member (9).

5. Disc brake according to any of the preceding claims, **characterised in that** head areas (11) formed with an otherwise circular contour are in each case provided with at least one recess (13), by virtue of which a passage is formed between any two adjacent chambers (6) of the bellows (10).

6. Disc brake according to any of the preceding claims, **characterised in that** the contour of the head areas (11) is in each case formed as a polygon.

7. Disc brake according to any of the preceding claims, **characterised in that** the chambers (6) of the bellows (10) formed by the folds are essentially of the same size.

## Revendications

1. Frein à disque, destiné notamment à un véhicule utilitaire, comprenant un étrier de frein (2) pourvu d'un disque de frein (3) apte à être porté en liaison opératoire à des garnitures de frein et fixé à un support de frein (1), à déplacement axial relativement audit disque de frein (3), aux chapeaux de guidage (9) étant reliés, à cette fin, audit support de frein (1), sur lesquels ledit étrier de frein (2)est guidé, à chaque chapeau de guidage (9) étant gainé par un soufflet (10) fixé à ses deux extrémités, dans la zone formée entre ledit étrier de frein (2) et ledit support de frein (1),
**caractérisé en ce que** les zones de tête périphériques (11) des plis dudit soufflet (10), qui se trouvent en face dudit chapeau de guidage (9), présentent un contour périphérique différent de la périphérie dudit chapeau de guidage (9).

2. Frein à disque selon la revendication 1, **caractérisé en ce que** lesdites zones de tête (11) portent, en partie, contre ledit chapeau de guidage (9).

3. Frein à disque selon la revendication 1 ou 2, **caractérisé en ce que** lesdites zones de tête (11) définissent un contour ovale.

4. Frein à disque selon une quelconque des revendications précédentes, **caractérisé en ce que** chacune des autres zones de tête, qui ont une configuration circulaire dans leur contour, est pourvue d'au moins une nope (12) portant contre la surface extérieure dudit chapeau de guidage (9).

5. Frein à disque selon une quelconque des revendications précédentes, **caractérisé en ce que** les autres zones de tête à une configuration circulaire dans leur contour sont pourvues d'au moins une encoche (13) formant un passage entre deux chambres contiguës (6) dudit soufflet (10).

6. Frein à disque selon une quelconque des revendications précédentes, **caractérisé en ce que** le contour respectif desdites zones de tête (11) est formé en tant qu'un polygone.

7. Frein à disque selon une quelconque des revendications précédentes, **caractérisé en ce que** lesdites chambres (6) formées par les plis dudit soufflet (10) sont essentiellement de la même dimension.
